# EUROPÄISCHE PATENTANMELDUNG

(11) **EP 4 001 984 A1**
(43) Veröffentlichungstag der Anmeldung: **25.05.2022**
(21) Anmeldenummer: 21205013.2
(22) Anmeldetag: 27.10.2021
(51) Int. Cl.: G02B 7/18, G02B 7/182, H01S 3/04, H01S 3/08

(54) **VERFAHREN UND VORRICHTUNG ZUR KÜHLUNG EINES OPTISCHEN ELEMENTS**

(30) Priorität: 16.11.2020 DE 102020130221
(71) Anmelder: Universität Hamburg, 20148 Hamburg (DE); Deutsches Elektronen-Synchrotron DESY, 22607 Hamburg (DE)
(72) Erfinder: Maier, Dr. Andreas, 22523 Hamburg (DE); Schnepp, Matthias, 22547 Hamburg (DE); Vilcins-Czvitkovits, Silke, 21039 Hamburg (DE); Leroux, Dr. Vincent, 91810 Vert-le-Grand (FR)
(74) Vertreter: Hauck Patentanwaltspartnerschaft mbB

(57) **Zusammenfassung**

Verfahren und Vorrichtung zur Kühlung eines optischen Elements (12). Das Verfahren beinhaltet das Bereitstellen eines optischen Elements, insbesondere eines optischen Substrats. Ferner beinhaltet das Verfahren das Bereitstellen eines Wärmeleitmittels (26), das miteinander in Kontakt stehende Filamente aufweist. Um das optische Element zu kühlen, wird eine Verbindung von dem Wärmeleitmittel und dem optischen Element hergestellt. Ferner ist vorgesehen, das Wärmeleitmittel an eine Wärmesenke (24) zur Ableitung von Wärme aus dem optischen Element anzuschließen.

## Beschreibung

### GEBIET DER ERFINDUNG

Die vorliegende Erfindung betrifft ein Verfahren zur Kühlung eines optischen Elements, in dem ein optisches Element mit einem Wärmeleitmittel und einer Wärmesenke verbindbar ist, und eine Vorrichtung zur Durchführung des Verfahrens.

### HINTERGRUND

Hochleistungslaser, als Laser mit extremen Spitzenleistungen auf einer Skala von Terawatt und höher, werden üblicherweise nach dem Prinzip der chirped-pulseamplification (CPA) aufgebaut, das 1985 von Donna Strickland und Gerard Mourou eingeführt wurde. Bei dieser Technik wird ein kurzer Femtosekunden Laserpuls mit breitem Spektrum und geringer Energie zunächst zeitlich gestreckt, um die Intensität des Pulses auf den Optiken des Lasers zu reduzieren. Die Streckung wird durch eine Weglängendifferenz der verschiedenen Wellenlängen im Spektrum des Laserpulses erzeugt. Auf diese Weise entsteht ein gestrecktes Wellenpaket, das über ein Verstärkermedium oder mehrere Verstärkermedien verstärkt wird. Der gestreckte und verstärkte Puls wird nachfolgend in einem sogenannten Kompressor, einer speziellen Anordnung von optischen Elementen, wieder gestaucht bzw. komprimiert. Anfängliche Streckung und nachfolgende Kompression der Laserpulse erfolgt über Weglängenunterschiede für die Wellenlängen des Lasers.

Während die optischen Elemente zu Beginn der Verstärkerkette, d.h., bei noch geringen Laser Pulsenergien, in der Regel moderaten thermischen Belastungen ausgesetzt sind, entstehen für die optischen Elemente in den letzten Verstärkerstufen und insbesondere im Laserpuls-Kompressor und in den nachfolgenden optischen Aufbauten große thermische Belastungen. Die thermische Belastung kann zu einer Verformung der optischen Elemente führen, was die Qualität des Laserpulses dramatisch verschlechtern kann. Insbesondere im Laserpuls-Kompressor kann eine Verformung von optischen Elementen z.B. dazu führen, dass der Laserpuls nicht vollständig komprimiert werden kann und Spitzenleistung verloren geht. An diese optischen Elemente werden daher hohe Anforderungen gestellt und sie sind deshalb meist teuer in der Herstellung. Auch sind die thermischen Belastungen auf die optischen Elemente zu reduzieren. Dafür gibt es den Ansatz die optischen Elemente zu kühlen. Im Stand der Technik gibt es verschiedenste Ansätze zur Kühlung der optischen Elemente.

Aus der Druckschrift WO 2010/118902 A1 ist ein lichtempfindlicher Sensor bekannt, der für extreme Ultraviolettstrahlung (EUV-Radiation) geeignet ist. Dieser Sensor besitzt ein zylindrisches Gehäuse, das in zwei Teile aufgeteilt ist. Die beiden mindestens teilweise zylindrischen Gehäuseteile sind thermisch miteinander gekoppelt und stehen mit einem Kühlkörper in Verbindung.

Aus der Druckschrift DE 10 2013 204 546 A1 ist ein optisches Bauteil bekannt, bei dem Kohlenstoffnanoröhrchen vorgesehen sind, um die mechanischen und thermischen Eigenschaften des optischen Bauteils zu verbessern.

Die Druckschrift DE 10 2015 001 673 A1 offenbart eine Kühlvorrichtung für optische Elemente. Die Kühlvorrichtung ist für ein aktives Medium eines Laserverstärkers vorgesehen, das zu einer spannungsarmen Wärmeübertragung ein optisch transmissives Kühlelement einsetzt.

Die Veröffentlichung von David A. Alessi et. al., Active cooling of pulse compression diffraction gratings for high energy, high average power ultrafast Lasers, in Optics Express, Vol. 24, Nr. 26, 26. Dezember 2016, Seiten 30015-30023 offenbart eine Kühlanordnung für ein Gitterelement. Die Kühlanordnung besteht aus zwei Kühlbalken, die an der Ober- und an der Unterseite des Gitterelements angebracht sind. Diese Kühlbalken sind jeweils mit einem Paar Kühlwasserleitungen verbunden.

### ZUSAMMENFASSUNG DER ERFINDUNG

Der Erfindung liegt die Aufgabe zugrunde, ein Verfahren bzw. eine Vorrichtung zur Kühlung eines optischen Elements bereitzustellen, die es ermöglichen, das optische Element so ausreichend zu kühlen, dass die optischen Eigenschaften des optischen Elements auch im Betrieb mit hohen Durchschnittsleistungen erhalten bleiben. Bei den optischen Eigenschaften handelt es sich insbesondere um die Oberflächengüte wie beispielsweise die Planheit.

Erfindungsgemäß wird die Aufgabe durch ein Verfahren mit den Merkmalen aus Anspruch 1 sowie durch eine Vorrichtung mit den Merkmalen aus Anspruch 6 gelöst. Vorteilhafte Ausgestaltungen bilden die Gegenstände der Unteransprüche.

Das erfindungsgemäße Verfahren besitzt die Merkmale aus Anspruch 1, wobei das Verfahren dazu vorgesehen und bestimmt ist, ein optisches Element zu kühlen. Das Verfahren weist eine Reihe von Schritten auf, deren zeitliche Reihenfolge nicht festgelegt ist. Das Verfahren beinhaltet das Bereitstellen eines optischen Elements, insbesondere eines optischen Substrats. Ferner beinhaltet das Verfahren das Bereitstellen eines Wärmeleitmittels, das miteinander in Kontakt stehende Filamente aufweist. Um das optische Element zu kühlen, wird eine Verbindung von dem Wärmeleitmittel und dem optischen Element hergestellt. Ferner ist vorgesehen, das Wärmeleitmittel an eine Wärmesenke zur Ableitung von Wärme aus dem optischen Element anzuschließen. Ein Vorteil bei dem vorgesehenen Kühlverfahren besteht darin, dass zwischen optischem Element und Wärmesenke ein Wärmeleitmittel angeordnet ist, das aus miteinander in Kontakt stehenden Filamenten besteht, wodurch Unebenheiten zwischen dem optischen Element und beispielsweise einer Halterung ausgeglichen werden können. Das aus miteinander in Kontakt stehenden Filamenten bestehende Wärmeleitmittel kann somit eine ausgleichende Wirkung aufweisen, um Verspannungen oder Verformungen des optischen Elements zu vermeiden. Ein weiterer Vorteil besteht darin, dass durch das Wärmeleitmittel beispielsweise auch Vibrationen und Erschütterungen nicht auf das optische Element übertragen werden können.

In einer bevorzugten Weiterbildung des erfindungsgemäßen Verfahrens wird eine Verteilung des Wärmeeintrags in das optische Element bestimmt. Das Wärmeleitmittel wird mit seinen Filamenten in Material, Dicke der Filamente, Dichte der Anordnung der Filamente, Verteilung der Filamente auf dem optischen Element und/oder der Verbindung mit dem optischen Element entsprechend der Verteilung des Wärmeeintrags ausgewählt. Bei der Verbindung mit dem optischen Element handelt es sich insbesondere um die Anbindung der Filamente an das optische Element und die Art der Anbindung. Bei der bevorzugten Weiterbildung wird also sowohl das Wärmeleitmittel mit seinen Filamenten als auch die Verbindung von dem Wärmeleitmittel mit dem optischen Element entsprechend der Verteilung des Wärmeeintrags ausgewählt bzw. an diese angepasst. Hierbei erfolgt die Verbindung derart, dass in dem optischen Element eine inhomogenen Wärmeverteilungen vermieden wird. In anderen Worten, das Wärmeleitmittel wird auf den Wärmeeintrag in das optische Element derart angepasst, dass in Bereichen des optischen Elements mit einem erhöhten Wärmeeintrag auch eine erhöhte Wärmeableitung hin zur Wärmesenke erfolgt und in Bereichen mit einem niedrigen Wärmeeintrag eine verminderte Wärmeableitung. Das Vermeiden einer inhomogenen Wärmeverteilung verhindert somit eine wärmebedingte Verformung des optischen Elements, die eine Verminderung der Oberflächengüte zur Folge hätte. Die Bestimmung der Verteilung für den Wärmeeintrag in das optische Element kann auf verschiedene Art und Weise gewonnen werden, beispielsweise durch Messung, Simulation oder auch einer Kombination von beidem.

Das bei dem erfindungsgemäßen Messverfahren bevorzugt verwendete Wärmeleitmittel weist gewirkte, geflochtene, gewobene, geknüpfte und/oder stoffschlüssig miteinander verbundene Filamente auf. Die Filamente können dabei punktuell oder über längere Abschnitte miteinander verbunden sein. Auch die Anordnung der Filamente zu dem Wärmeleitmittel kann je nach gewünschter Wärmeleitfähigkeit punktuell oder in Abschnitten erfolgen.

In einer bevorzugten Weiterbildung erfolgt ein Herstellen des Wärmeleitmittels in einem additiven Herstellungsverfahren, insbesondere in einem 3D-Druckverfahren und/oder in einem thermischen Verfahren. Bei einem thermischen Verfahren werden bevorzugt zweistufige thermische Verfahren eingesetzt, wie beispielsweise ein Anlöten der Filamente an eine aufgedampfte leitfähige Schicht auf dem optischen Element, insbesondere einem Substrat. Ein Vorteil bei dem 3D-Druckverfahren besteht darin, dass durch dieses Verfahren eine Vielfalt an unterschiedlichen Geometrien für das Substrat oder die Filamente beziehungsweise für die Einbettung der Filamente in das optische Element gefertigt werden kann. Zudem lassen sich durch das 3D-Druckverfahren leicht unterschiedliche Materialien kombinieren und die Materialeigenschaften können durch das Herstellungsverfahren selbst beeinflusst werden. Das thermische Verfahren bietet den Vorteil, dass verschiedene Materialien mit unterschiedlichen Materialeigenschaften, wie beispielsweise unterschiedlichen Wärmeausdehnungskoeffizienten, stoffschlüssig verbunden werden können. Diese Herstellungsverfahren sind insbesondere von Vorteil, wenn das Wärmeleitmittel mit seinen Filamenten als auch die Verbindung von dem Wärmeleitmittel mit dem optischen Element entsprechend der Verteilung des Wärmeeintrags angepasst werden sollen.

In einer weiteren bevorzugten Ausgestaltung wird das Wärmeleitmittel mit einer Oberfläche des optischen Elements verbunden, wobei mindestens ein Teil der Filamente des Wärmeleitmittels in das optische Element eingebettet und/oder form-/kraftschlüssig mit diesem verbunden sind. Eine Einbettung der Filamente kann beispielsweise durch ein 3D-Druckverfahren erfolgen, bei dem sowohl das Substrat als auch die Filamente gedruckt werden. Filamente, die mindestens zum Teil in das optische Element eingebettet und/oder form-/kraftschlüssig mit diesem verbunden werden, können weiteren Filamenten als Basis für deren Befestigung dienen. Die weiteren Filamente können dann je nach Wunsch mit den vorstehenden Filamenten verbunden und somit das Wärmeleitmittel bilden.

Die erfindungsgemäße Aufgabe wird ebenfalls durch eine Vorrichtung zur Kühlung eines optischen Elements mit den Merkmalen aus Anspruch 6 gelöst. Die erfindungsgemäße Vorrichtung zur Kühlung des optischen Elements umfasst insbesondere ein Wärmeleitmittel. Das optische Element, insbesondere ein Substrat, ist mit dem Wärmeleitmittel verbunden, das dazu ausgebildet ist, Wärme aus dem optischen Element an eine Wärmesenke abzuleiten. Das Wärmeleitmittel weist dabei eine Vielzahl von miteinander in Kontakt stehenden Filamenten auf, von denen zumindest einige mit dem optischen Element verbunden sind. Die Einheit aus optischem Element, Wärmeleitmittel und Wärmesenke ist Teil einer optischen Vorrichtung bzw. eines optischen Aufbaus. Das Wärmeleitmittel ist mit seiner Vielzahl an Filamenten derart mit dem optischen Element verbunden, dass ein Wärmeeintrag in das optische Element zur Wärmesenke abgeleitet werden kann. Der Wärmeeintrag in das optische Element erfolgt bei einer Vielzahl von Anwendungen lokal unterschiedlich, wobei durch die Verbindung des Wärmeleitmittels dieser lokale Unterschied ausgeglichen und der Wärmeeintrag zur Wärmesenke gleichförmig abgeleitet werden kann.

In einer bevorzugten Ausgestaltung ist mindestens ein Teil der Filamente in das optische Element eingebettet und steht aus diesem vor, insbesondere zur Verbindung mit weiteren Filamenten. Die eingebetteten Filamente können einen Wärmeeintrag in das optische Element auch im Inneren des optischen Elements aufnehmen. Dies ermöglicht eine verbesserte Ableitung der Wärme, da das Wärmeleitmittel eine höhere Wärmeleitfähigkeit als das optische Substrat aufweist. Folglich kann die Wärme effizienter aus dem Inneren des optischen Elements abgeleitet werden.

In einer weiteren bevorzugten Ausgestaltung ist mindestens ein Teil der Filamente kraftschlüssig mit dem optischen Element über ein Halteelement verbunden. Das Halteelement stellt eine kraftschlüssige Verbindung zwischen den Filamenten und dem optischen Element her, um einen guten Wärmeübergang zwischen dem optischen Element und den Filamenten zu erzielen.

Bevorzugt ist mindestens ein Teil der Filamente an ihrem zum optischen Element weisenden Ende mit einer oder mehreren Filamentwurzeln ausgestattet, die in einen Filamentkörper übergehen und deren Querschnitt zur besseren Wärmeaufnahme aus dem optischen Element gegenüber dem Filamentkörper vergrößert ist. Die Filamentwurzel erhöht die Kontaktfläche zwischen Filament und optischem Element und stellt durch diese verbesserte Kontaktierung so eine erhöhte Wärmeaufnahme sicher.

In einer bevorzugten Weiterbildung weist mindestens ein Teil der Filamente eine Länge auf, um in einem Strang oder in mehreren Strängen gebündelt zu werden, die direkt oder mittelbar über einen Wärmeleiter mit der Wärmesenke verbindbar sind. Die Verwendung von Filamenten, die zu einem oder mehreren Strängen geformt werden, besitzt den Vorteil der guten Wärmeleitung und zusätzlich erlauben der oder die Stränge eine gewisse Flexibilität bei der Führung des Wärmeleitmittels. Zudem kann das optische Element durch den einen oder durch die mehreren Stränge auch ohne die Verwendung eines zusätzlichen Halteelements positioniert werden.

In einer möglichen Ausgestaltung besitzt das Halteelement auf seiner dem Wärmeleitmittel zugewandten Seite eine Durchbrechung, durch die das Wärmeleitmittel mit seinen Filamenten geführt ist. Die Filamente des Wärmeleitmittels werden gebündelt und in gebündelter Form durch die Durchbrechung geführt. Ebenfalls ist es möglich, dass das Halteelement mit dem zur Wärmesenke führenden Wärmeleitmittel verbunden ist.

In einer bevorzugten Weiterbildung entspricht die in das optische Element eingetragene Wärmemenge der an die Wärmesenke weitergeleiteten Wärmemenge. Die Wärmeleitfähigkeit des Wärmeleitmittels ist im Übergang zum optischen Element abhängig von der Verteilung des Wärmeeintrags in das optische Element. Die nahezu vollständige Weiterleitung der in das optische Element eingetragenen Wärmemenge an die Wärmesenke ist besonders vorteilhaft, wenn sich der optische Aufbau im Vakuum befindet. Im Vakuum ist die Wärmeabgabe durch Abstrahlung an die Umgebung minimal und die nahezu vollständige Ableitung der in das optische Element eingetragenen Wärme muss über ein Wärmeleitmittel erfolgen.

Die Wärmeleitfähigkeit des Wärmeleitmittels wird bevorzugt durch die Wahl des Materials der Filamente, die Dicke der Filamente, die Dichte der Anordnung der Filamente, die Verteilung der Filamente auf dem optischen Element und/oder durch die Verbindung mit dem optischen Element entsprechend der Verteilung des Wärmeeintrags gewählt. Bei der Verbindung mit dem optischen Element handelt es sich insbesondere um die Anbindung der Filamente an das optische Element und die Art der Anbindung. Mithilfe dieser unterschiedlichen Größen kann die Wärmeleitfähigkeit des aus Filamenten bestehenden Wärmeleitmittels insgesamt derart eingestellt werden, dass ein lokal ungleichmäßiger Wärmeeintrag ausgeglichen wird.

### KURZE BESCHREIBUNG DER FIGUREN

Die Erfindung wird nachfolgend anhand der Beschreibung von mehreren Ausführungsbeispielen unter Bezugnahme auf die beigefügten Figuren erläutert. Die Figuren zeigen schematische Ansichten der Ausführungsbeispiele. Es zeigen:
- Fig. 1: eine vereinfachte schematische Darstellung eines optischen Elements in einem Halteelement mit einem Wärmeleitmittel nach dem Stand der Technik,
- Fig. 2: eine vereinfachte schematische Darstellung einer ersten Ausführungsform der erfindungsgemäßen Vorrichtung zur Kühlung eines optischen Elements mit wärmeleitenden Filamenten zwischen dem optischen Element und dem Halteelement,
- Fig. 3: eine vereinfachte Darstellung einer Verteilung des Wärmeeintrags in das optische Element, insbesondere ein Substrat, sowie eine angepasste Dichte des Wärmeleitmittels an den Wärmeeintrag in das optische Element,
- Fig. 4: eine vereinfachte schematische Darstellung einer zweiten Ausführungsform mit in das optische Element eingebetteten Filamenten,
- Fig. 5: eine vereinfachte schematische Darstellung einer dritten Ausführungsform mit in das optische Element eingebetteten Filamenten und zu einem Strang gebündelten Filamenten,
- Fig. 6: eine vereinfachte schematische Darstellung eine vierte Ausführungsform, bei der die gebündelten Filamente durch eine Durchbrechung in der Halterung geführt sind und

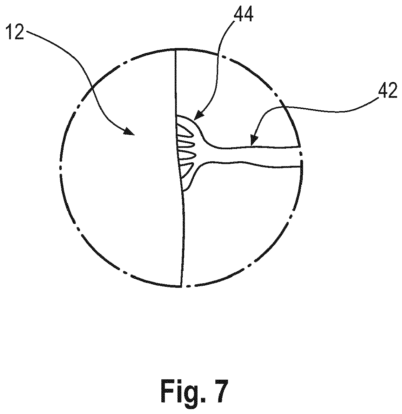

- Fig. 7: eine Detailansicht einer Filamentwurzel an dem optischen Element.

### AUSFÜHRLICHE BESCHREIBUNG

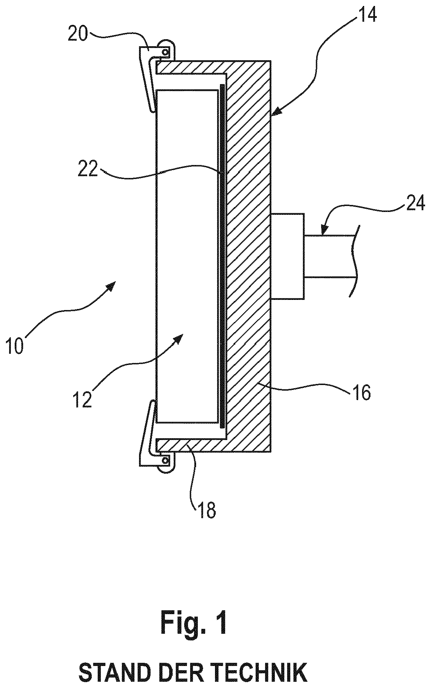

Für ein besseres Verständnis der Erfindung ist es hilfreich, zunächst einen optischen Aufbau 10 mit einem optischen Element 12 in einem Halteelement 14 und einem Wärmeleitmittel 26 nach dem Stand der Technik in Fig. 1 zu betrachten. Das optische Element 12 kann insbesondere ein Substrat sein. Bei dem Substrat kann es sich beispielsweise um ein optisches Glas handeln, insbesondere einem Kronglas, Phosphatglas, Quarzglas oder Silikat-Glas. Auch andere Gläser, die bevorzugt einen sehr niedrigen Wärmeausdehnungskoeffizienten besitzen, können als Substrat vorgesehen sein.

Das optische Element 12, im Folgenden auch als Substrat bezeichnet, befindet sich in einem Halteelement 14, das eine Grundplatte 16 und umlaufende Seitenwände 18 besitzt. Die Grundplatte 16 und die Seitenwände 18 bilden einen Aufnahmebereich, in dem das Substrat 12 angeordnet ist. Das Halteelement kann zudem Kontaktfederelemente 20 umfassen. Das Substrat 12 wird in dem Aufnahmebereich von den Kontaktfederelementen 20 in Fig. 1 gehalten und gegen die Grundplatte 16 gedrückt. Zwischen Substrat 12 und Grundplatte 16 befindet sich hier eine wärmeleitende Kontaktfolie 22, die beispielsweise aus einem sehr gut wärmeleitenden Material, insbesondere einem Metall wie Indium, bestehen kann. Das Halteelement 14, im Folgenden auch als Halterung bezeichnet, besitzt an ihrer Grundplatte 16 auf der vom Substrat 12 fortweisenden Seite einen Anschluss 24, der mit einer entfernt angeordneten Wärmesenke verbunden ist. Die Halterung 14 besitzt bei der bekannten Lösung zwei Funktionen, einerseits wird durch die Halterung 14 das Substrat 12 in Position gehalten bzw. kann durch dieses auch positioniert werden. Andererseits dient die Halterung 14 mit ihrer Grundplatte 16 zugleich auch als ein Kühlkörper.

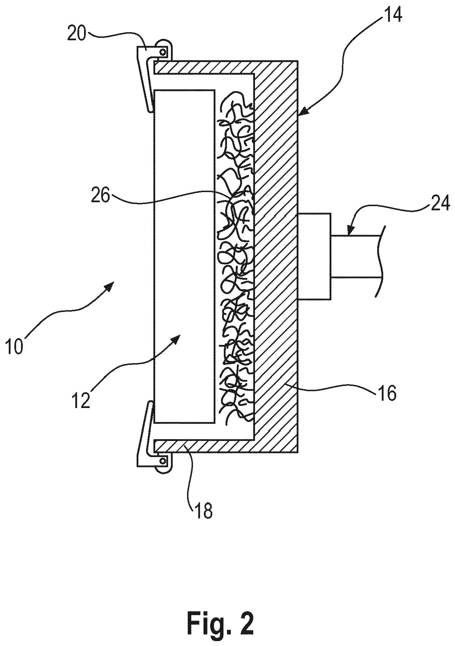

Figur 2 zeigt eine erste Ausführungsform der Erfindung, wobei in dieser und den nachfolgenden Figuren gleiche Elemente mit gleichen Bezugszeichen belegt sind. Die vorliegende Erfindung kann in den unterschiedlichen Ausführungsformen insbesondere zur Kühlung eines Substrats in einem optischen Aufbau bzw. in einem Lasersystem mit hohen Durchschnittsleistungen eingesetzt werden. Der optische Aufbau umfasst nicht nur den Laser selbst, sondern auch den Transport eines Laserstrahls zu einem gewünschten Interaktionspunkt. Für die Wärmeeffekte ist die Durchschnittsleistung eine wichtige Größe. Die Vorrichtung bzw. das Verfahren zur Kühlung des Substrats kann für eine Durchschnittsleistung im Bereich von einigen wenigen Watt bis zu mehreren Kilowatt ausgelegt sein. Die Vorrichtung bzw. das Verfahren kann neben einem Dauerstrichbetrieb für einen gepulsten Betrieb mit Pulsdauern im Bereich von Femtosekunden bis Nanosekunden, für Pulsenergien im Bereich von einigen Hundert Millijoule bis einigen Kilojoule und einer Repetitionsrate im Bereich von einem Hertz bis Hundert Kilohertz und darüber hinaus ausgelegt sein. Das Substrat 12, kann aus den bereits in der Beschreibung zu Fig. 1 genannten Gläser sein als auch aus Saphir, einer Keramik, einer Glaskeramik oder einem Metall bestehen.

Das Substrat 12 wird von Kontaktfederelementen 20 in der Halterung 14 gehalten. Die Halterung 14 ist zentral mit einem Anschluss 24 für die Kühlung versehen. Bei der Kühlung kann es sich sowohl um eine aktive als auch eine passive Kühlung handeln. Zwischen Substrat 12 und Halterung 14 ist ein Wärmeleitmittel 26 vorgesehen, das das Substrat 12 mit der Halterung 14 verbindet. Über das Wärmeleitmittel 26 wird eine in das Substrat eingetragene Wärmemenge an die Halterung 14 übertragen und von dieser auf den Anschluss für die Kühlung 24. Das Wärmeleitmittel besteht, wie in Figur 2 angedeutet, aus einer Vielzahl von Filamenten. Die Filamente können als Mono- oder Multifilamente ausgebildet sein. Auch Kernmantelfilamente sind möglich. Auch in ihrer Form können die Filamente variieren, ein runder, ovaler und eckiger Querschnitt, beispielsweise hexagonal, sind für die Filamente möglich. Auch können die Filamente selbst eine gerichtete Struktur, wie beispielsweise eine wendel- oder schraubenförmige Struktur, als auch eine ungerichtete Struktur, wie beispielsweise eine knäulförmige Struktur, aufweisen. Die Dicke der Filamente befindet sich im Bereich von Millimeterbruchteilen und dicker. Die Filamente können aus Metallen bestehen, die bevorzugt eine sehr hohe Wärmeleitfähigkeit aufweisen, wie Kupfer und Silber. Besonders vorteilhaft ist es, wenn die Filamente besonders viele Kontakte bzw. eine große Anzahl an Kontaktflächen zu dem Substrat aufweist.

Die das Wärmeleitmittel 26 bildenden Filamente können miteinander verbunden sein. Für die Verbindung der Filamente untereinander ist es möglich, ein gewirktes, geflochtenes, gewobenes, geknüpftes und/oder sonst wie in Verbindung stehendes Material zu schaffen. Neben diesen unterschiedlichen, insbesondere textiltechnischen Verbindungen der Filamente untereinander, ist es auch möglich, die Filamente stoffschlüssig miteinander zu verbinden. Die stoffschlüssige Verbindung der Filamente untereinander kann punktuell oder abschnittsweise erfolgen, beispielsweise durch verkleben oder verschmelzen.

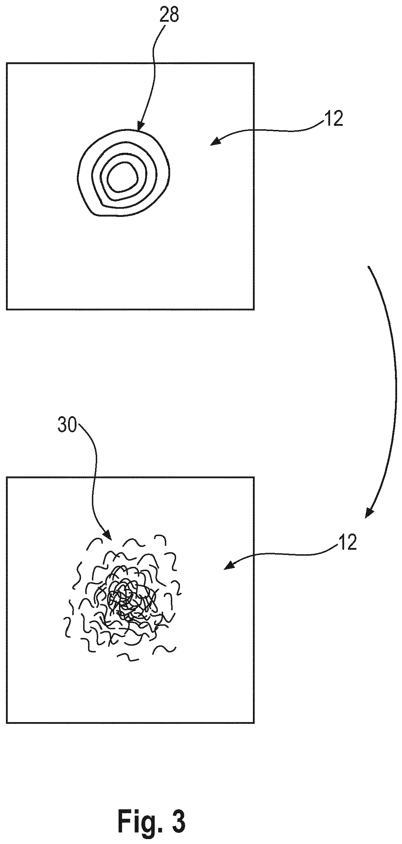

Figur 3 zeigt in seiner oberen Darstellung das Strahlprofil 28 auf dem Substrat 12, das den Wärmeeintrag in das Substrat verdeutlicht. Untenstehend ist in Figur 3 die Dichte 30 der Filamente in dem Wärmeleitmittel dargestellt. Deutlich zu erkennen ist, dass die Dichte 30 der Filamente in dem Bereich des Strahlprofils 28 am größten ist, in dem der größte Wärmeeintrag in das Substrat erfolgt. Figur 3 zeigt die Anpassung des Wärmeleitmittels über die Dichte der Filamente. Eine Anpassung ist ebenfalls über andere Faktoren möglich wie beispielweise über die Auswahl des Materials für die Filamente, die Anbindung der Filamente an dem Substrat und die Art der Anbindung, die Dicke der Filamente, die Verteilung der Filamente auf dem Substrat und die Art der Verbindung der Filamente mit dem Substrat.

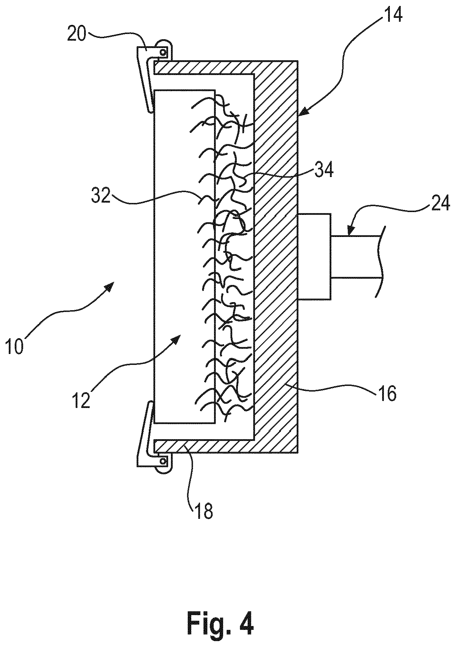

Figur 4 zeigt eine weitere Ausführungsform der Erfindung, bei der mindestens ein Teil der Filamente in das optische Element 12 eingebettet ist. Die in das Substrat eingebetteten Filamente 32 können beispielsweise durch ein additives Herstellungsverfahren für das Substrat 12 mit in dieses eingearbeitet werden. Die eingebetteten Filamente 32 stehen aus dem Substrat vor und können mit weiteren Filamenten 34 verbunden sein, um die gewünschte Wärmeleitung zwischen Substrat 12 und Halterung 14 herzustellen. Die eingebetteten Filamente 32 nehmen, anders als die im Zwischenraum zwischen Substrat 12 und Halterung 14 befindlichen Filamente, eine gewisse Wärmemenge im Inneren des Substrats auf, um diese Wärmemenge direkt in die Halterung 14 oder in die weiteren Filamente 34 weiterzuleiten.

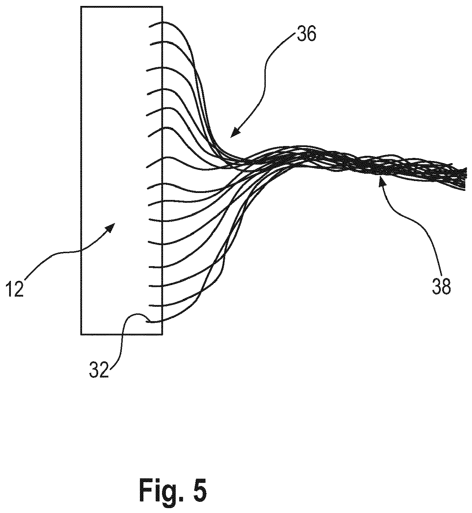

Figur 5 zeigt eine weitere Ausgestaltung der Erfindung, bei der ebenfalls mit eingebetteten Filamenten 32 Wärme aus dem Inneren des Substrats 12 nach außen geleitet wird. Die eingebetteten Filamente 32 sind entweder durchgehend oder mit weiteren Filamenten 36 verbunden, die zu einem Bündel 38 zusammengeführt werden. Das Bündel 38 der Filamente bildet einen guten Wärmeleiter, der zudem, je nach gewähltem Material und Dicke der Filamente, auch eine gewisse Flexibilität und Modellierbarkeit, insbesondere in der Biegbarkeit, besitzt. Das optische Element kann durch den einen oder durch die mehreren Stränge auch ohne die Verwendung eines zusätzlichen Halteelements positioniert werden.

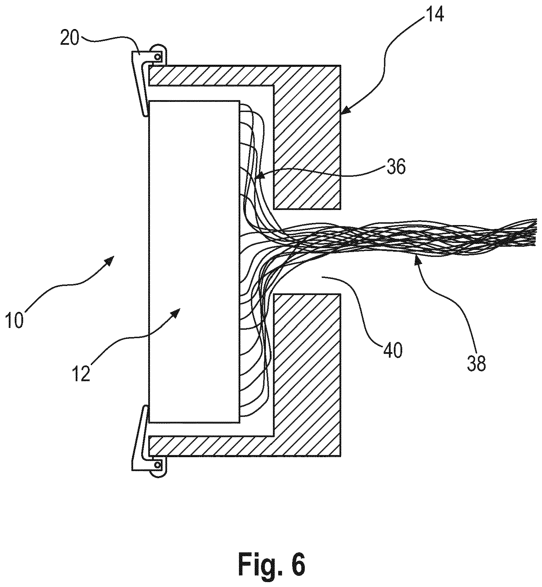

Figur 6 zeigt eine weitere Ausführungsform, die ebenfalls ein Bündel 38 von Filamenten besitzt. Das Bündel 38 ist durch eine Durchbrechung 40 in der Halterung 14 geführt. Die Halterung des 14 kommt bei dieser Ausgestaltung in thermischen Kontakt mit den ausgetretenen Filamenten 36, wodurch sich die Wärmeabfuhr gegenüber der Ausgestaltung aus Figur 5 noch verbessert.

In den zuvor gezeigten Ausführungsformen, wurden eingebettete Filamente gezeigt. Gegenüber den eingebetteten Filamenten gibt es auch Filamente 42, die eine Filamentwurzel 44 besitzen. Diese Filamente sind über ihre Filamentwurzel 44 mit dem Substrat 12 verbunden. Hierfür eignet sich beispielsweise ein zweistufiges thermisches Verfahren, bei dem das Substrat 12 zuerst beschichtet und anschließend die Filamentwurzel aufgelötet wird. Die verbreitete Basis der Filamentwurzel 44 nimmt über einen größeren Bereich die Wärmemenge auf und erlaubt es diese abzutransportieren. Auch das mehr an Material in der Filamentwurzel 44, die ein- oder mehrgliedrig ausgebildet sein kann, unterstützt den Wärmetransport.

### BEZUGSZEICHENLISTE

- 10: optischer Aufbau
- 12: optisches Element
- 14: Halteelement
- 16: Grundplatte
- 18: Seitenwände
- 20: Kontaktfederelemente
- 22: wärmeleitende Kontaktfolie
- 24: Anschluss für Kühlung
- 26: Wärmeleitmittel
- 28: Strahlprofil
- 30: Dichte der Filamente in dem Wärmeleitmittel
- 32: eingebettete Filamente
- 34: weitere Filamente
- 36: weitere Filamente
- 38: Bündel von Filamenten
- 40: Durchbrechung
- 42: Filamente
- 44: Filamentwurzel

## Patentansprüche

1. Verfahren zur Kühlung eines optischen Elements, wobei das Verfahren folgende Schritte aufweist:
o Bereitstellen eines optischen Elements, insbesondere eines optischen Substrats,
o Bereitstellen eines Wärmeleitmittels, das miteinander in Kontakt stehende Filamente besitzt,
o Herstellen einer Verbindung von dem Wärmeleitmittel und dem optischen Element und
o Anbinden des Wärmeleitmittels an eine Wärmesenke zur Ableitung von Wärme aus dem optischen Element.

2. Verfahren nach Anspruch 1, **gekennzeichnet durch**:
o Bestimmen einer Verteilung des Wärmeeintrags in das optische Element, wobei das Wärmeleitmittel mit seinen Filamenten in Material, Dicke der Filamente, Dichte der Anordnung der Filamente, Verteilung der Filamente auf dem optischen Element und/oder der Verbindung mit dem optischen Element, insbesondere die Anbindung der Filamente an das optische Element und die Art der Anbindung, entsprechend der Verteilung des Wärmeeintrags ausgewählt ist.

3. Verfahren nach Anspruch 1 oder 2, **dadurch gekennzeichnet, dass**
∘ Das Wärmeleitmittel gewirkte, geflochtene, gewobene, geknüpfte und/oder stoffschlüssig miteinander verbundene Filamente aufweist.

4. Verfahren nach einem der Ansprüche 1 bis 3, **gekennzeichnet durch**:
∘ Herstellen des Wärmeleitmittels in einem additiven Herstellungsverfahren, insbesondere einem 3D-Druckverfahren und/oder in einem thermischen Verfahren, insbesondere einem 2-stufigen thermischen Verfahren.

5. Verfahren nach einem der Ansprüche 1 bis 4, **gekennzeichnet durch**:
∘ das Wärmeleitmittel mit einer Oberfläche des optischen Elements verbunden wird, wobei mindestens ein Teil der Filamente des Wärmleitmittels in das optische Element eingebettet und/oder form-/kraftschlüssig mit diesem verbunden wird.

6. Vorrichtung zur Kühlung eines optischen Elements, wobei das optische Element, insbesondere ein optisches Substrat, mit einem Wärmeleitmittel verbunden ist, das dazu ausgebildet ist, die Wärme aus dem optischen Element an eine Wärmesenke abzuleiten, **dadurch gekennzeichnet, dass** das Wärmeleitmittel eine Vielzahl von mit einander in Kontakt stehenden Filamenten aufweist, von denen zumindest einige mit dem optischen Element verbunden sind.

7. Vorrichtung nach Anspruch 6, **dadurch gekennzeichnet, dass** mindestens ein Teil der Filamente in das optische Element eingebettet ist und aus diesem hervorstehen, insbesondere zur Verbindung mit weiteren Filamenten.

8. Vorrichtung nach Anspruch 6 oder 7, **dadurch gekennzeichnet, dass** mindestens ein Teil der Filamente kraftschlüssig mit dem optischen Element über ein Halteelement verbunden sind.

9. Vorrichtung nach einem der Ansprüche 6 bis 8, **dadurch gekennzeichnet, dass** mindestens ein Teil der Filamente an ihrem zu dem optischen Element weisenden Ende eine oder mehrere Filamentwurzeln aufweisen, die in einen Filamentkörper übergehen und deren Querschnitt zur besseren Wärmeaufnahme aus dem optischen Element gegenüber dem Filamentkörper vergrößert ist.

10. Vorrichtung nach einem der Ansprüche 6 bis 9, **dadurch gekennzeichnet, dass** mindestens ein Teil der Filamente eine Länge aufweist, um in einem Strang oder mehreren Strängen gebündelt zu werden, die direkt oder mittelbar über einen Wärmeleiter mit der Wärmesenke verbindbar sind.

11. Vorrichtung nach Anspruch 10, **dadurch gekennzeichnet, dass** das Halteelement auf seiner dem Wärmeleitmittel zugewandten Seite eine Durchbrechung aufweist, durch die das Wärmeleitmittel mit seinen Filamenten geführt ist.

12. Vorrichtung nach einem der Ansprüche 8 bis 11, **dadurch gekennzeichnet, dass** das Halteelement mit dem zur Wärmesenke führenden Wärmeleitmittel verbunden ist.

13. Vorrichtung nach einem der Ansprüche 6 bis 12, **dadurch gekennzeichnet, dass** die in das optische Element eingetragene Wärmemenge der an die Wärmesenke weitergeleitete Wärmemenge entspricht, wobei die die Wärmeleitfähigkeit des Wärmeleitmittels im Übergang zum optischen Element abhängig von der Verteilung des Wärmeeintrags in das optische Element gewählt wird.

14. Vorrichtung nach Anspruch 13, **dadurch gekennzeichnet, dass** die Wärmeleitfähigkeit des Wärmeleitmittels durch die Wahl des Materials der Filamente, der Dicke der Filamente, der Dichte der Anordnung der Filamente, der Verteilung der Filamente auf dem optischen und/oder durch die Verbindung mit dem optischen Element, insbesondere die Anbindung der Filamente an das optische Element und die Art der Anbindung, entsprechend der Verteilung des Wärmeeintrags gewählt wird.
